# EUROPÄISCHE PATENTANMELDUNG

(11) **EP 1 462 417 A1**
(43) Veröffentlichungstag der Anmeldung: **29.09.2004**
(21) Anmeldenummer: 03006844.9
(22) Anmeldetag: 28.03.2003
(51) Int. Cl.: C02F 11/10, C10B 53/02, C10G 1/00

(54) **Kombiniertes Verfahren zur Strom- und Wärmeerzeugung aus Klärschlamm und Biomasse**

(71) Anmelder: von Görtz & Finger Techn. Entwicklungs Ges.m.b.H., 36110 Schlitz (DE)
(72) Erfinder: Finger, Ulrich, 87647 Oberthingau (DE); Graf von Görtz, Rüdiger, 36110 Schlitz (DE)

(57) **Zusammenfassung**

Kombiniertes Verfahren zur Strom- und Wärmegewinnung aus Klärschlamm und oder Biomasse, durch Pyrolyse.

Mit einem Konverter wird Klärschlamm in ein Fluid und Kohle aufgeteilt. Aus dem Fluid wird ein brennbares Öl erzeugt, das für den Betrieb eines Zündstrahl- oder Dieselmotors verwendet wird. Die Kohle kann zur Abkühlung und Reinigung des Holzgases aus dem Vergaser dienen, sie kann auch direkt vergast werden.

## Beschreibung

Das Verfahren bezieht sich auf eine kombinierte Energieerzeugung aus Klärschlamm und Biomasse, wobei in erster Linie an Altholz oder Restholz gedacht ist.

Durch bereits bekannte Verfahren ist es möglich Klärschlamm in einzelne Bestandteile thermisch zu zerlegen, die daraus gewonnenen Produkte können einzeln verwertet werden. Der Verfahrensanspruch besteht darin, dass hier ein kombiniertes Verfahren zur gleichzeitigen Energieerzeugung aus Klärschlamm und Biomasse dargestellt wird.

Ein Niedertemperatur - Konverter der durch eine Luke Nr. 1 mit Klärschlamm beschickt werden kann, wird von aussen externe Wärme zugeführt. Bei Temperaturen von 350° bis 400° Celsius arbeitet der Konverter drucklos unter Sauerstoffausschluss. Mit Hilfe von bestimmten Katalysatoren wird der Klärschlamm in Reaktionswasser, konvertierte Kohle und ein Fluid zersetzt.
Mittels einer Abscheider - Zentrifuge kann das Fluid in ein Rohöl und Reaktionswasser aufgetrennt werden. Die hierbei entstehenden Restgase werden dem im Vergaser erzeugten Holzgas beigemischt.

Das Reaktionswasser wird in einem Auffangbehälter Nr. 3 gesammelt oder kann in dem Vorfluter der Kläranlage direkt entsorgt.

Die konvertierte Kohle wird mittels einer Fördereinrichtung Nr. 5 dem Vorratsbehälters eines Rohrvergasers Nr. 4 zugeführt. Das im Rohrvergaser erzeugte Holzgas strömt durch eine Transportschnecke, die mit konvertierter Kohle aus dem Konverter gefüllt ist. Dadurch wird das Holzgas abgekühlt und gleichzeitig nimmt die konvertierte Kohle die bei der Abkühlung entstehenden Teere und Kondensate auf. Nach Sättigung der konvertierten Kohle wird diese intervallweise dem Holzvergaser zugeführt, wo sie mit vergast wird. Sollten größere Mengen an konvertierter Kohle zur Verfügung stehen, kann diese auch direkt dem Vergaser zugeführt werden. Das entstehende Holzgas wird durch eine Rohrleitung Nr. 7 dem Zündstrahlmotor Nr. 8 zugeführt. Um eine erforderliche Prozesswärme im Vergaser zu erreichen, ist es erforderlich Holzhackschnitzel oder andere Biomasse in den Vorratsbehälter Nr. 6 einzufüllen. Eine sich im Vergaser befindliche Transportschnecke fördert die darin aufgeheizten Holzhackschnitzel zum vorderen Teil des Holzvergasers wo ein Teil des Holzes zur Erzeugung der Prozesswärme verbrannt wird.

Das gereinigte Pyrolyseöl gelangt durch eine Rohrleitung Nr. 10 zum Motor Nr. 8. Sollte die Zündfähigkeit des erzeugten Gases nicht ausreichen, kann durch zusätzliches Einspritzen des Pyrolyseöls die Zündung des Gases erreicht werden. Der mit dem Zündstrahlmotor direkt angekuppelte Generator Nr. 9 produziert Strom, der ins Netz eingespeist werden kann. Die ca. 500° heißen Abgase des Blockheizkraftwerkes Nr. 8 gelangen durch eine Rohrleitung Nr. 11 zum Konverter Nr. 2. Für den Anfahrbetrieb und zur Beschleunigung des Pyrolyseprozesses im Konverter kann in diese Rohrleitung Nr. 11 ein Wärmetauscher mit einem Zündbrenner integriert werden, der mit dem erzeugten Gas gespeist wird. Gleichzeitig kann damit die Betriebstemperatur des Konverters sichergestellt werden.

Die Abgase nach dem Konverter haben ein noch erhebliches Wärmepotential, das mittels eines Wärmetauschers Nr. 12 für die Klärschlammtrocknung genutzt werden kann. Die abgekühlten Abgase gelangen dann in einen Kamin Nr. 13 ins Freie. Sollten bei einer bestehenden Anlage - Klärwerk - Gase aus weiteren Gaserzeugern - Faulgas - anfallen so können diese gemeinsam mit den in den vorstehen Anlagen entstehenden Gasen dem Motor zugeführt werden.

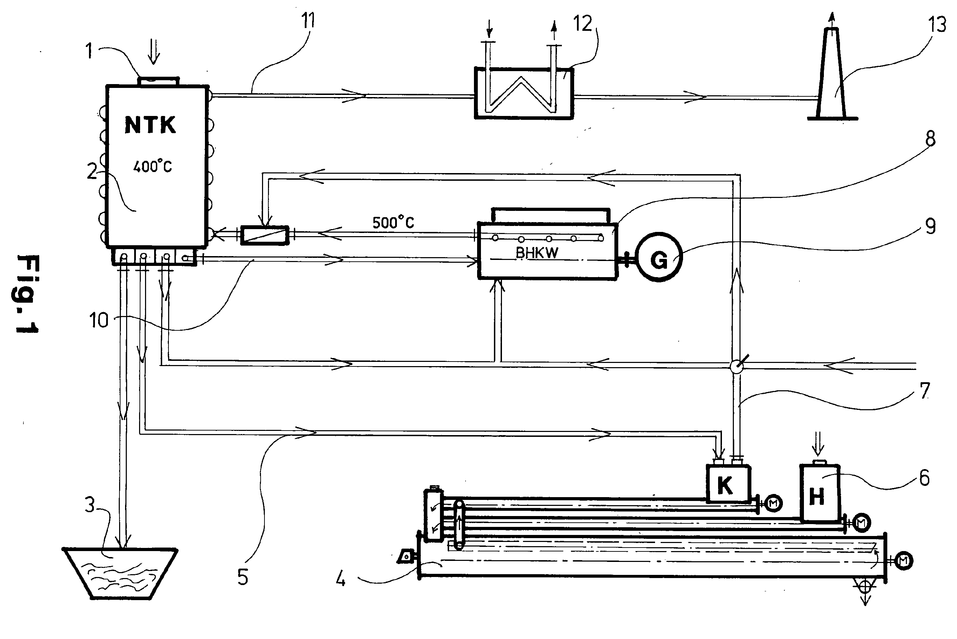

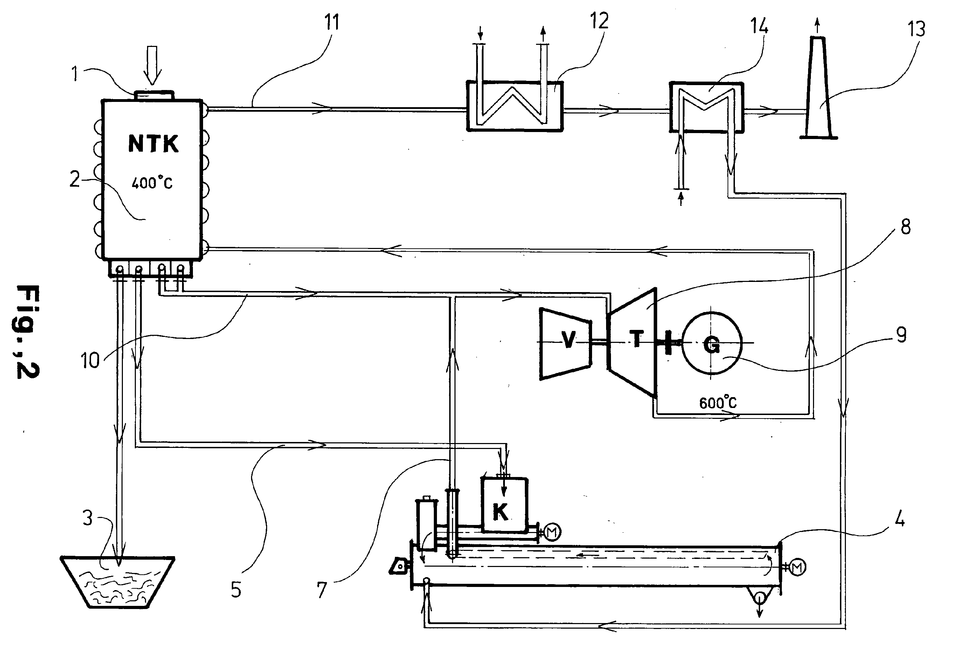

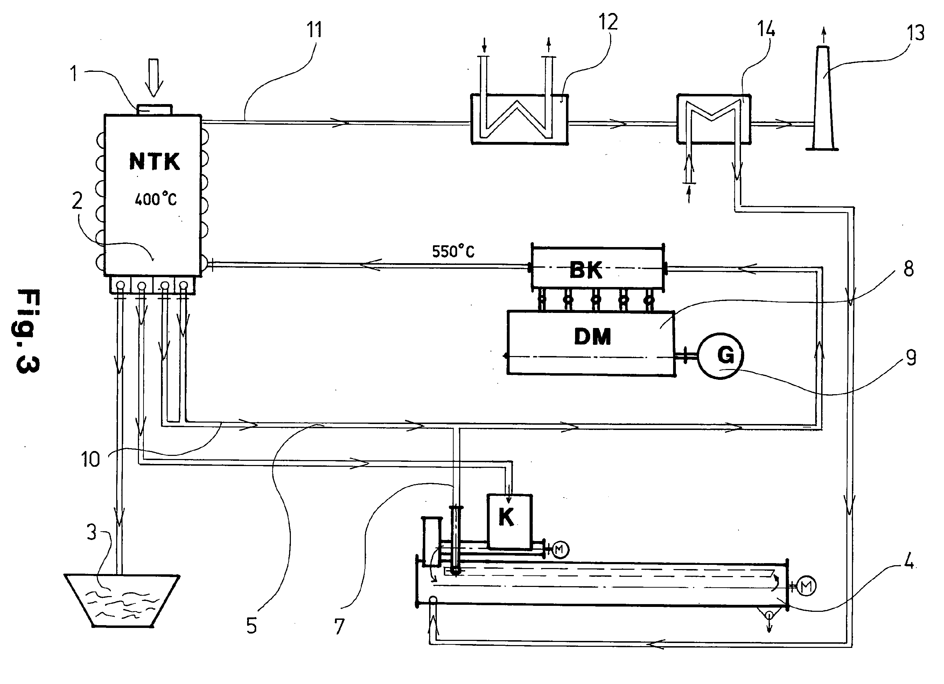

Eine weitere Möglichkeit der Energieerzeugung aus Klärschlamm oder Biomasse wird in Fig. 2 dargestellt.

Ein Gemisch aus Öldampf und Gas wird aus dem Konverter Nr. 2 über die Rohrleitung Nr. 10 ohne Abkühlung direkt einer Gasturbine Nr. 8 zugeführt. Gleichzeitig kann die konvertierte Kohle aus dem Konverter Nr. 2 in dem Vergaser zur Vergasung genutzt werden. Das dabei entstehende Gas wird über eine Rohrleitung Nr. 7 ebenfalls ungekühlt der Gasturbine direkt zugeführt.

Die heissen Abgase aus der Gasturbine - 600° C - können für die Erwärmung des Konverters Nr. 2 genutzt werden. Eine zusätzliche Erhitzung ist nicht erforderlich, da die Temperaturdifferenz von 600° C zu 400° C im Konverter ausreicht

Die Abgase nach dem Wärmetauscher Nr. 12, können für die Erwärmung der Vergaserluft genutzt werden. Mit einer isolierten Luftleitung Nr. 14 gelangt die erwärmte Vergaserluft zum Vergaser.

Fig. 3 zeigt eine weitere Möglichkeit der Energieerzeugung aus Klärschlamm oder Biomasse.

Sowohl das Gasgemisch aus dem Konverter als auch das Gas aus dem Vergaser können ohne Abkühlung einem katalytischen Porenbrenner zugeführt werden. Durch die glühende Porenkeramik wird ein sehr guter Ausbrand der Gase und eine hohe Verbrennungstemperatur erreicht. Mit dieser Wärme wird in einem speziellem Wärmetauscher Flashdampf erzeugt, der dann für den Antrieb eines Dampfmotors oder Turbine zur Stromerzeugung genutzt werden kann.

Der Porenbrenner kann so eingestellt werden, dass die Abgastemperatur ausreicht, den Konverter zu beheizen.

## Patentansprüche

1. Verfahren zur kombinierten Energieerzeugung aus Klärschlamm und Biomasse **dadurch gekennzeichnet, dass** getrennte Produkte aus der Pyrolyse von Klärschlamm anschließend gemeinsam für die Energieerzeugung verwendet werden.

2. Verfahren nach Anspruch 1 **dadurch gekennzeichnet, dass** Pyrolyseöl direkt in einem Verbrennungsmotor mit einem Generator zur Stromerzeugung genutzt wird.

3. Verfahren nach Anspruch 2 **dadurch gekennzeichnet, dass** die konvertierte Kohle im Holzvergaser zur Abkühlung und Reinigung des Holzgases benutzt wird.

4. Verfahren nach Anspruch 3 **dadurch gekennzeichnet, dass** die erwärmte und mit Teerrückständen belastete konvertierte Kohle im Vergaser bei hohen Temperaturen vergast wird.

5. Verfahren nach Anspruch 4 **dadurch gekennzeichnet, dass** die konvertierte Kohle auch direkt dem Vergaser als Vergasungsmaterial zugeführt werden kann.

6. Verfahren nach Anspruch 5 **dadurch gekennzeichnet, dass** das Reaktionswasser aus dem Konverter mittels eines Überhitzers verdampf wird und zur Verbesserung des Gases in den Vergasungsprozess eingesprüht wird.

7. Verfahren nach Anspruch 6 **dadurch gekennzeichnet, dass** die Abwärme aus dem BHKW als Prozesswärme für den Klärschlammkonverter benutzt wird.

8. Verfahren nach Anspruch 7 **dadurch gekennzeichnet, dass** die Abgase des BHKW mit einem Holzgas-Stützbrenner zusätzlich erhitzt werden.

9. Verfahren nach Anspruch 8 **dadurch gekennzeichnet, dass** sowohl das Gas-Ölgemisch aus dem Konverter als auch das heisse Gas aus dem Vergaser einer Gasturbine ungekühlt zugeführt werden kann.

10. Verfahren nach Anspruch 9 **dadurch gekennzeichnet, dass** alle Gase einem katalytischen - Porenbrenner zur Flashdampferzeugung und damit zum Antrieb eines Dampfmotors genutzt werden kann.

11. Verfahren nach Anspruch 10 **dadurch gekennzeichnet, dass** die Wärme des Abgases nach dem Konverter mittels eines Wärmetauschers zur Klärschlammtrocknung genutzt werden kann.

12. Verfahren nach Anspruch 11 **dadurch gekennzeichnet, dass** die Vergasungsluft nach dem Wärmetauscher von dem Abgas erwärmt wird.

13. Verfahren nach Anspruch 12 **dadurch gekennzeichnet, dass** in das kombinierte Verfahren zur Energieerzeugung auch andere Energieträger wie z.B. Klärgas beigemischt werden können.
